# EUROPEAN PATENT SPECIFICATION

(11) **EP 3 657 135 B1**
(45) Date of publication and mention of the grant of the patent: **28.04.2021**
(21) Application number: 19383021.3
(22) Date of filing: 20.11.2019
(51) Int. Cl.: G01D 5/244, G01D 11/30, G01D 5/347

(54) **OPTOELECTRONIC MEASURING DEVICE**
OPTOELEKTRONISCHE MESSVORRICHTUNG
DISPOSITIF DE MESURE OPTO-ELECTRONIQUE

(30) Priority: 21.11.2018 EP 18382835
(43) Date of publication of application: 27.05.2020
(73) Proprietor: FAGOR AUTOMATION S.COOP., 20500 Arrasate - Mondragon (ES)
(72) Inventor: ZUNZUNEGI MUGICA, José Javier, 20550 ARETXABALETA (ES)
(74) Representative: Igartua, Ismael

(56) References cited:
- US-A- 5 375 338
- US-A1- 2013 019 489
- US-A1- 2018 038 677
- US-B1- 6 772 531

## Description

### TECHNICAL FIELD

The present invention relates to optical measuring devices which are configured for measuring the movement between two objects and comprising a hollow profile with a graduated scale arranged inside said hollow profile.

### PRIOR ART

Optoelectronic measuring devices which are suitable for determining the position between two objects comprise a graduated scale, and a read head facing the graduated scale and movable with respect to said graduated scale in a measuring direction parallel to the graduated scale. The read head comprises a light emitter emitting a light beam to illuminate the graduated scale, a detection device receiving the light going through or reflected by the graduated scale, and a controlling determining the position between the graduated scale and the read head depending on the light received by the detection device.

Some of these devices comprise a hollow profile, and the graduated scale is arranged inside said hollow profile. The hollow profile is fixed to one of the objects, whereas the read head is fixed to the other object.

The hollow profile comprises a longitudinal opening, and the read head comprises an active part that is introduced inside the profile and moves longitudinally through said opening. A gasket allowing the connection between the active part of the read head and another part of said head that is located outside the profile is arranged in the opening and closes said opening in a leak-tight manner. Therefore, the inside of the hollow profile is free of any impurity that may access it from the outside, and the determination of the position is carried out in a clean and safe environment.

EP2549240A2 discloses an optoelectronic measuring device of this type, and comprises a hollow profile with a main body defining an inner cavity, and a channel connected to said main body, which is arranged in said inner cavity and is configured for housing the graduated scale. The optoelectronic measuring device further comprises a scale fixing device for fixing the graduated scale to the hollow profile, such that said graduated scale remains stationary with respect to the hollow profile, and a profile fixing device for fixing the hollow profile to the corresponding object, the profile fixing device being accessible in a given fixing direction, which is transverse to the longitudinal direction, to cause said fixing.

US2018038677A1 discloses an optoelectronic device. To immobilize the graduated scale in both opposite measuring directions, a plurality of holes is made previously in said graduated scale. In particular at least one hole is made in each end of the graduated scale, so that the insertion of respective hooks or screws therein is allowed for carrying out said immobilization. In order to cause the actuation of the hooks, a respective actuation over each hook is required (at least two actuations therefore). In the case of using screws, actuations from a certain face of the profile is required, said certain face being different from the face of the profile from which other fixing devices are actuated, are required.

### DISCLOSURE OF THE INVENTION

The object of the invention is to provide an optoelectronic measuring device, as defined in the claims.

The optoelectronic measuring device is configured for measuring the relative position of a first object with respect to a second object, one of the objects being movable with respect to the other object in any of two opposing measuring directions along a longitudinal axis.

The optoelectronic measuring device is of the type known as encapsulated optoelectronic measuring devices, and comprises:
- a graduated scale,
- a hollow profile comprising a main body defining an inner cavity, and a channel arranged in said inner cavity, extending along a longitudinal axis and being configured for housing the graduated scale,
- a scale fixing device for immobilizing the graduated scale along the longitudinal axis, in both opposing measuring directions, when housed in the channel, and
- a profile fixing device for fixing the hollow profile to the first object.

The scale fixing device and the profile fixing device are accessible from the same face of the hollow profile to perform the corresponding fixing operation.

The hollow profile comprises a mounting face configured for being arranged facing the first object (the object to which said hollow profile is attached), the scale fixing device and the profile fixing device being accessible from the face of said hollow profile opposite said mounting face to perform the corresponding fixing operation.

Therefore, since both fixing devices are accessible from the same face of the hollow profile, in the proposed optoelectronic measuring device a user causes the immobilization of the graduated scale and the fixing of the hollow profile to the first object by accessing the optoelectronic measuring device from the same face. Unlike what occurs in other solutions, the proposed optoelectronic measuring device allows both fixing elements to always be accessible in the same manner (from the same face of the hollow profile), preventing circumstances in which one of the fixing elements is accessible while the other is not due to the environment where said optoelectronic measuring device is installed, as all the faces of the hollow profile could not be accessible. As a result, installation of the optoelectronic measuring device is made easier, regardless of the mounting conditions.

The scale fixing device comprises an elongated element with a longitudinal axis extending in a scale fixing direction and the profile fixing device comprises a respective elongated element with a longitudinal axis extending in a scale fixing direction. The scale fixing device is configured for performing the fixing of the graduated scale with a longitudinal movement in the scale fixing direction of its elongated element and the profile fixing device is configured for performing the fixing of the hollow profile with a longitudinal movement in the profile fixing direction of its elongated element.

The scale fixing device further comprises an additional element configured for exerting pressure on the graduated scale against a support surface in an anchoring direction, whereby said graduated scale arranged in the channel of the hollow profile is kept immobilized in both measuring directions, the elongated element being configured for causing the movement of said additional element in the anchoring direction when it is actuated in the scale fixing direction.

Said configuration of the scale fixing device provides, in addition, the immobilization of the graduated scale in both measuring directions, with only one actuation (upon the corresponding elongated element), if required, in contrast with the prior art, when it is not possible to do so if a hooked configuration is used. Furthermore, the immobilization of the graduated scale does not require a specific actuation over the graduated scale before the actuation of the elongated element (or after), as no hole is required to be made in said graduated scale (in contrast to the prior art), for example.

These and other advantages and features of the invention will become apparent in view of the drawings and detailed description of the invention.

### DESCRIPTION OF THE DRAWINGS

Figure 1 is a perspective view of the preferred embodiment of the optoelectronic measuring device of the invention, with the hollow profile of said device attached to a first object.
Figure 2 is a section view of the optoelectronic measuring device of Figure 1.
Figure 3 shows a channel of the hollow profile of the optoelectronic measuring device of Figure 1.

### DETAILED DISCLOSURE OF THE INVENTION

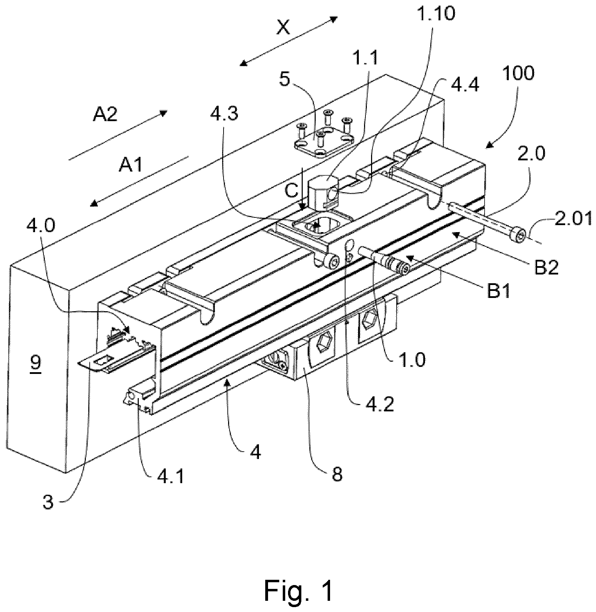

Figure 1 shows an embodiment of the optoelectronic measuring device 100 of the invention which is configured for measuring the relative position of a first object with respect to a second object, one of the objects being movable with respect to the other object in both opposing measuring directions A1 and A2 along a longitudinal axis X.

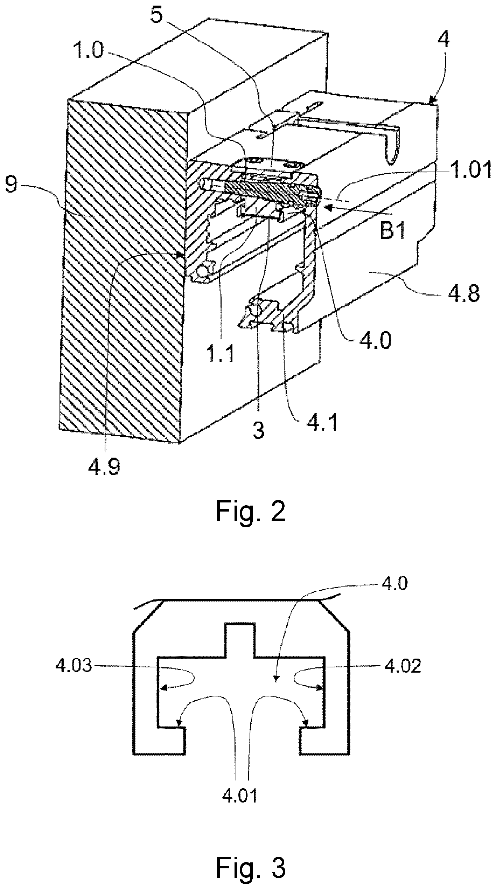

The optoelectronic measuring device 100 comprises a graduated scale 3, a hollow profile 4 with a main body 4.1 defining an inner cavity and a read head 8 movable with respect to the graduated scale 3 in both measuring directions A1 and A2. The hollow profile 4 comprises a channel 4.0 arranged in said inner cavity, extending along the longitudinal axis X and being configured for housing the graduated scale 3. The hollow profile 4 preferably comprises a rectangular shape. The channel 4.0 preferably comprises a "C" shape in each side S (one of them "C" inverse shape"), as shown in Figure 3 by way of example. The graduated scale 3 is supported on the bottom surface 4.01 of said "C" shape.

The optoelectronic measuring device 100 further comprises a scale fixing device for fixing the graduated scale 3 in both measuring directions A1 and A2, preferably for fixing it to the channel 4.0 or for immobilizing it in said channel 4.0, such that said graduated scale 3 remains stationary at least in the measuring directions A1 and A2, and a profile fixing device for fixing the hollow profile 4 to one of the objects (the first object 9). The graduated scale 3 could also, or instead, be fixed to an intermediate element (not shown in Figures), said intermediate element being joined to the hollow profile 4 (with possibility of being displaced in respect of said hollow profile 4 in the measuring directions A1 and A2, or without said possibility). The scale fixing device causes then the direct fixing of the graduated scale 3 in respect of the intermediate element, the graduated scale 3 being then also immobilized in the channel 4.0 in both measuring directions A1 and A2.

The intermediate element could comprise a channel for housing the graduated scale 3, aligned with the channel 4.0 of the hollow profile 4, but other configurations alternative to the channel are also possible because the position of the graduated scale 3 is assured thanks to said channel 4.0 of the hollow profile 4. In the case of using an intermediate element as described, said channel 4.0 of the hollow profile 4 would have a discontinuity along the longitudinal axis X in the area where said intermediate element is present. The hollow profile 4 can be joined to the first object 9 as described before.

Summing up, the scale fixing device is configured for immobilizing the graduated scale 3 at least in respect of the measuring directions A1 and A2, once it is housed in the channel 4.0 of the hollow profile 4. Said immobilization can be caused directly or indirectly (through the intermediate element).

Both fixing devices are accessible from the same face of the hollow profile 4, preferably from a front face 4.8 of said hollow profile 4 opposite a mounting face 4.9, to perform the corresponding fixing operation. For its attachment to the first object 9, the mounting face 4.9 of said hollow profile 4 is arranged facing said first object 9 (preferably said mounting face 4.9 is supported on said first object 9, as shown in the drawings).

The scale fixing device comprises an elongated element 1.0 with a longitudinal axis 1.01 extending in a scale fixing direction B1, and the profile fixing device comprises a respective elongated element 2.0 with a longitudinal axis 2.01 extending in a scale fixing direction B2. The scale fixing device is configured for performing the fixing of the graduated scale 3 with a longitudinal movement in the scale fixing direction B1 of its elongated element 1.0, and the profile fixing device is configured for performing the fixing of the hollow profile 4 with respect to the first object 9 with a longitudinal movement in the profile fixing direction B2 of its elongated element 2.0. In a preferred embodiment both fixing directions B1 and B2 are parallel, and, in said preferred embodiment, said fixing directions B1 and B2 are transverse to measuring directions A1 and A2. Preferably, said fixing directions B1 and B2 are horizontal, but they can also define an angle in respect of the horizontal. Other possible combinations are also possible (like one fixing direction being horizontal and the other one defining an angle in respect of the horizontal or both fixing directions defining different angles in respect of the horizontal, for example), taken into account that both fixing directions B1 and B2 must be always accessible from the same face of the hollow profile 4.

The elongated element 2.0 of the profile fixing device may comprise, for example, a screw, which grips and fixes the hollow profile 4 against the first object 9, which is normally a work bench or bedplate of a machine. The elongated element 2.0 is accessible from one face of the hollow profile 4 to perform the corresponding fixing operation, the profile fixing device thereby being accessible from said face to perform said fixing operation. In turn, the hollow profile 4 may comprise a through hole 4.4 which the elongated element 2.0 goes through, said elongated element 2.0 thereby fixing said hollow profile 4 to the first object 9. The through hole 4.4 could also be interpreted as part of the profile fixing device.

The elongated element 1.0 of the scale fixing device may comprise, for example, a screw or the like, which causes the immobilization of the graduated scale 3 in the measuring directions A1 and A2.

The scale fixing device further comprises an additional element 1.1 configured for exerting pressure on the graduated scale 3, in an anchoring direction C, preferably, but not limited to, different from the scale fixing direction B1, whereby the graduated scale 3 arranged in the channel 4.0 of the hollow profile 4 is kept immobilized in the measuring directions A1 and A2 (thanks to said pressure). The elongated element 1.0 is configured for causing the movement of said additional element 1.1 in the anchoring direction C when it is actuated in the scale fixing direction B1. The elongated element 1.0 thereby causes the fixing of the graduated scale 3 in the measuring directions A1 and A2, in an indirect manner (without directly acting on the graduated scale 3). According to the invention, the anchoring direction C is perpendicular to the scale fixing direction B1 and/or to any of the measuring directions A1 and A2.

The additional element 1.1 presses the graduated scale 3 against a support surface of a certain element. Preferably, the support surface is a support surface of the hollow profile 4, and, preferably, said support surface is a support surface of the channel 4.0 of said hollow profile 4 (any of the lateral surfaces 4.02 and 4.03 or a bottom surface 4.01, or even an upper surface of the channel 4.0). Alternatively, the support surface can be a support surface of the intermediate element, if any. In any case, the graduated scale 3 is immobilized against the corresponding support surface at least in the measuring directions A1 and A2. Therefore, said additional element 1.1 causes the graduated scale 3 to be immobilized in both opposite measuring directions A1 and A2, and not only in one of them, one actuation being enough for causing said immobilization.

In the preferred embodiment, the scale fixing device is configured so that the additional element 1.1 presses the graduated scale 3 against the support surface of the channel 4.0 on which the graduated scale 3 is supported, when it exerts pressure in the anchoring direction C, thereby immobilizing said graduated scale 3 in said channel 4.0.

In the preferred embodiment, the hollow profile 4 comprises a first hole 4.2 extending in the scale fixing direction B1 from the face of the hollow profile 4 from which the elongated element 1.0 of the scale fixing device is accessible to perform the corresponding fixing operation, and a second hole 4.3 extending in the anchoring direction C from another one of the faces of the hollow profile 4 and being communicated with the first hole 4.2. The additional element 1.1 of the scale fixing device comprises a hole 1.10, which is communicated with the first hole 4.2 of said hollow profile 4 when the additional element 1.1 is housed in the second hole 4.3. The holes 4.2 and 4.3 could also be interpreted as part of the scale fixing device.

When the scale fixing device is immobilizing the graduated scale 3, a situation which is shown by way of example in Figure 2 related to the preferred embodiment, the additional element 1.1 is housed in the second hole 4.3 of the hollow profile 4 and the elongated element 1.0 is housed in the first hole 4.2 of the hollow profile 4 and in the hole 1.10 of the additional element 1.1.

In some embodiments, the elongated element 1.0 and the additional element 1.1 are configured such that said elongated element 1.0 acts as a cam and causes the movement of the additional element 1.1 in the anchoring direction C when it is housed in said hole 1.10. In the preferred embodiment, the outer surface of the elongated element 1.0 of the scale fixing device and the surface of the additional element 1.1 demarcating the hole 1.10 are conical, such that as the elongated element 1.0 moves through the hole 1.10, the movement in the anchoring direction C of the additional element 1.1 is caused.

In other embodiments, the center of the hole 1.10 of the additional element 1.1 of the scale fixing device and the center of the first hole 4.2 of the hollow profile 4 are misaligned in the scale fixing direction B1 when the elongated element 1.0 is not housed in said holes 1.10 and 4.2, such that when said elongated element 1.0 is inserted in said holes 1.10 and 4.2, as it is first housed in the first hole 4.2, when it reaches the hole 1.10 it causes the movement of the additional element 1.1 in the anchoring direction C. The center of the hole 1.10 is above the center of the first hole 4.2, with respect to the graduated scale 3.

At least in the preferred embodiment, the optoelectronic measuring device 100 comprises a lid 5 associated with the second hole 4.3 of the hollow profile 4 for closing said second hole 4.3 in a leak-tight manner and thereby preventing being able to introduce any element in the inner cavity of the hollow profile 4 through said second hole 4.3. The lid 5 could also be interpreted as part of the scale fixing device.

Depending on the length of the hollow profile 4, for example, the optoelectronic measuring device 100 may comprise a plurality of profile fixing devices for fixing the hollow profile 4 to the first object 9, and/or a plurality of scale fixing devices for fixing the graduated scale 3 to the hollow profile 4 (for immobilizing it in the channel 4.0 of said hollow profile 4).

In some embodiments of the device of the invention, not shown in Figures, the elongated element 1.0 of the scale fixing device and the elongated element 2.0 of the profile fixing device are the same elongated element. Therefore, with only one actuation both the graduated scale 3 and the hollow profile 4 are fixed as required.

In some embodiments of the device of the invention, not shown in Figures, the hollow profile 4 is formed by a plurality of hollow profile segments distributed along the longitudinal axis X and attached to the first object 9. In said embodiments, the optoelectronic measuring device comprises at least one respective profile fixing device for attaching each hollow profile segment to said first object 9, and the scale fixing device is associated, preferably, to only one of said hollow profile segments.

## Claims

1. Optoelectronic measuring device configured for measuring the position of a first object with respect to a second object, one of the objects being movable with respect to the other object along a longitudinal axis (X), in two opposite measuring directions (A1, A2), the optoelectronic measuring device (100) comprising a graduated scale (3), a hollow profile (4) comprising a main body (4.1) defining an inner cavity, and a channel (4.0) arranged in said inner cavity, the channel (4.0) extending along said longitudinal axis (X) and said channel (4.0) being configured for housing the graduated scale (3), the optoelectronic measuring device (100) also comprising a scale fixing device configured for immobilizing the graduated scale (3) at least in the longitudinal axis (X), in the two opposite measuring directions (A1, A2), when housed in the channel (4.0), and a profile fixing device configured for fixing the hollow profile (4) to the first object (9), the hollow profile (4) comprising a mounting face (4.9) configured for being arranged facing the first object (9), the scale fixing device and the profile fixing device being accessible from the face (4.8) of said hollow profile (4) opposite said mounting face (4.9) to perform the corresponding fixing operation, the scale fixing device comprising an elongated element (1.0) with a longitudinal axis (1.01) extending in a scale fixing direction (B1) and the profile fixing device comprising a respective elongated element (2.0) with a longitudinal axis (2.01) extending in a profile fixing direction (B2), the scale fixing device being configured for performing the fixing of the graduated scale (3) with a longitudinal movement in the scale fixing direction (B1) of its elongated element (1.0) and the profile fixing device being configured for performing the fixing of the hollow profile (4) with a longitudinal movement in the profile fixing direction (B2) of its elongated element (2.0), **characterized in that** the scale fixing device further comprises an additional element (1.1) configured for exerting pressure on the graduated scale (3) arranged in the channel (4.0) of the hollow profile (4), in an anchoring direction (C), configured for immobilizing said graduated scale (3) in both opposing measuring directions (A1 A2), the anchoring direction (C) being different from both measuring directions (A1, A2), and perpendicular to the scale fixing direction (B1) and/or to any of the measuring directions (A1, A2), and the elongated element (1.0) being configured for causing the movement of said additional element (1.1) in the anchoring direction (C) when it is actuated in the scale fixing direction (B1) such that the graduated scale (3) is immobilized in both measuring directions (A1, A2) with said only actuation.

2. Optoelectronic measuring device according to claim 1, wherein the additional element (1.1) is configured for exerting pressure on the graduated scale (3) such that said graduated scale (3) is pressed against a support surface, said support surface being a surface of the channel (4.0) or a surface of an intermediate element joined to the hollow profile (4).

3. Optoelectronic measuring device according to claim 2, comprising an intermediate element joined to the hollow profile (4), the scale fixing device being configured such that, for immobilizing the graduated scale (3), the additional element (1.1) is adapted for pressing said graduated scale (3) against a support of said intermediate element when it exerts pressure in the anchoring direction (C) on said graduated scale (3), said graduated scale (3) being thus immobilized in both measuring directions (A1, A2).

4. Optoelectronic measuring device according to any of claims 1 to 3, wherein the hollow profile (4) comprises a first hole (4.2) extending in the scale fixing direction (B1) from the face (4.8) of the hollow profile (4) which is accessible for performing the corresponding fixing operations, and a second hole (4.3) extending in the anchoring direction (C) from another one of the faces of the hollow profile (4) and being communicated with the first hole (4.2), the additional element (1.1) of the scale fixing device being housed in the second hole (4.3) of the hollow profile (4), and said additional element (1.1) comprising a hole (1.10) communicated with the first hole (4.2) of said hollow profile (4).

5. Optoelectronic measuring device according to claim 4, wherein the elongated element (1.0) and the additional element (1.1) of the scale fixing device are configured such that said elongated element (1.0) acts as a cam, and when it is housed in the hole (1.10) of the additional element (1.1) it causes the movement of the additional element (1.1) in the anchoring direction (C).

6. Optoelectronic measuring device according to claim 5, wherein the outer surface of the elongated element (1.0) of the scale fixing device and/or the surface of the additional element (1.1) of said scale fixing device demarcating the hole (1.10) of the additional element (1.1) are conical, such that as the elongated element (1.0) moves through said hole (1.10), the movement in the anchoring direction (C) of the additional element (1.1) is caused.

7. Optoelectronic measuring device according to any of claims 4 to 6, wherein the center of the hole (1.10) of the additional element (1.1) of the scale fixing device and the center of the first hole (4.2) of the hollow profile (4) are misaligned in the scale fixing direction (B1), when the elongated element (1.0) is not arranged in said holes (1.10, 4.2), the center of the hole (1.10) of the additional element (1.1) being above the center of the first hole (4.2) of the hollow profile (4) with respect to the graduated scale (3).

8. Optoelectronic measuring device according to any of claims 4 to 7, comprising a lid (5) for closing in a leak-tight manner the second hole (4.3) of the hollow profile (4).

9. Optoelectronic measuring device according to any of claims 1 to 8, wherein the scale fixing direction (B1) and the profile fixing direction (B2) are directions transverse to both measuring directions (A1, A2).

10. Optoelectronic measuring device according to any of claims 1 to 9, wherein the scale fixing direction (B1) and the profile fixing direction (B2) are perpendicular to the mounting face (4.9) of the hollow profile (4).

11. Optoelectronic measuring device according to any of claims 1 to 10, wherein the scale fixing direction (B1) and the profile fixing direction (B2) are parallel.

12. Optoelectronic measuring device according to any of claims 1 to 10, wherein the elongated element (1.0) of the scale fixing device and the elongated element (2.0) of the profile fixing device are the same elongated element.

13. Optoelectronic measuring device according to any of claims 1 to 12, wherein the hollow profile (4) is formed by a plurality of hollow profile segments distributed along the longitudinal axis (X) and attached to the first object (9), the optoelectronic measuring device comprising at least one respective profile fixing device for attaching each hollow profile segment to said first object (9) and the scale fixing device being associated to one of said hollow profile segments.

## Patentansprüche

1. Optoelektronische Messvorrichtung, welche dazu ausgebildet ist, die Stellung eines ersten Gegenstandes in Bezug auf einen zweiten Gegenstand zu messen, wobei einer der Gegenstände in Bezug auf den anderen Gegenstand entlang einer Längsachse (X), in zwei entgegengesetzte Messrichtungen (A1, A2), beweglich ist, wobei die optoelektronische Messvorrichtung (100) eine Gradskala (3), ein Hohlprofil (4) umfassend einen Hauptkörper (4.1), welches eine innere Kavität definiert, und einen Kanal (4.0), welcher in der genannten inneren Kavität angeordnet ist, umfasst, wobei sich der Kanal (4.0) entlang der genannten Längsachse (X) erstreckt und wobei der genannte Kanal (4.0) dazu ausgebildet ist, die Gradskala (3) aufzunehmen, wobei die optoelektronische Messvorrichtung (100) auch eine Skalabefestigungsvorrichtung, welche dazu ausgebildet ist, die Gradskala (3) mindestens in der Längsachse (X), in den zwei entgegengesetzten Messrichtungen (A1, A2), zu immobilisieren, wenn sie im Kanal (4.0) aufgenommen ist, und einen Profilbefestigungsvorrichtung, welche dazu ausgebildet ist, das Hohlprofil (4) am ersten Gegenstand (9) zu befestigen, umfasst, wobei das Hohlprofil (4) eine Montagefläche (4.9) umfasst, welche dazu ausgebildet ist, dem ersten Gegenstand (9) zugewandt angeordnet zu werden, wobei die Skalabefestigungsvorrichtung und die Profilbefestigungsvorrichtung von der Fläche (4.8) des genannten Hohlprofils (4) aus, welche der genannten Montagefläche (4.9) gegenüberliegt, zugänglich sind, um den entsprechenden Befestigungsvorgang durchzuführen, wobei die Skalabefestigungsvorrichtung ein langgestreckten Element (1.0) umfasst, mit einer Längsachse (1.01), welche sich in eine Skalabefestigungsrichtung (B1) erstreckt, und wobei die Profilbefestigungsvorrichtung ein jeweiliges langgestrecktes Element (2.0) umfasst, mit einer Längsachse (2.01), welche sich in eine Profilbefestigungsrichtung (B2) erstreckt, wobei die Skalabefestigungsvorrichtung dazu ausgebildet ist, die Befestigung der Gradskala (3) mit einer Längsbewegung in der Skalabefestigungsrichtung (B1) deren langgestreckten Elements (1.0) durchzuführen und wobei die Profilbefestigungsvorrichtung dazu ausgebildet ist, die Befestigung des Hohlprofils (4) mit einer Längsbewegung in der Profilbefestigungsrichtung (B2) deren langgestreckten Elements (2.0) durchzuführen, **dadurch gekennzeichnet, dass** die Skalabefestigungsvorrichtung zusätzlich ein zusätzliches Element (1.1) umfasst, welches dazu ausgebildet ist, Druck auf die Gradskala (3), welche im Kanal (4.0) des Hohlprofils (4) angeordnet ist, in einer Verankerungsrichtung (C) auszuüben, welche zur Immobilisierung der genannten Gradskala (3) in beiden entgegengesetzten Messrichtungen (A1, A2) ausgebildet ist, wobei die Verankerungsrichtung (C) sich von beiden Messrichtungen (A1, A2) unterscheidet und senkrecht zur Skalabefestigungsrichtung (B1) und/oder zu jeder der Messrichtungen (A1, A2) ist, und wobei das langgestreckte Element (1.0) dazu ausgebildet ist, die Bewegung des genannten zusätzlichen Elements (1.1) in die Verankerungsrichtung (C) hervorzurufen, wenn es in die Skalabefestigungsrichtung (B1) betätigt, wird, sodass die Gradskala (3) in beide Messrichtungen (A1, A2) mit der genannten einzigen Betätigung immobilisiert wird.

2. Optoelektronische Messvorrichtung nach Anspruch 1, wobei das zusätzliche Element (1.1) dazu ausgebildet ist, Druck auf die Gradskala (3) auszuüben, sodass die genannten Gradskala (3) gegen eine Stützoberfläche gedrückt wird, wobei die genannte Stützoberfläche eine Oberfläche des Kanals (4.0) oder eine Oberfläche eines Zwischenelements, welches mit dem Hohlprofil (4) verbunden ist, ist.

3. Optoelektronische Messvorrichtung nach Anspruch 2, umfassend ein Zwischenelement, welches mit dem Hohlprofil (4) verbunden ist, wobei die Skalabefestigungsvorrichtung derart ausgebildet ist, dass, zur Immobilisierung der Gradskala (3), das zusätzliche Element (1.1) dazu angepasst ist, die genannte Gradskala (3) gegen eine Stütze des genannten Zwischenelements zu drücken, wenn es Druck in die Verankerungsrichtung (C) auf die genannte Gradskala (3) ausübt, wobei die genannte Gradskala (3) somit in beide Messrichtungen (A1, A2) immobilisiert wird.

4. Optoelektronische Messvorrichtung nach einem der Ansprüche 1 bis 3, wobei das Hohlprofil (4) ein erstes Loch (4.2), welches sich in die Skalabefestigungsrichtung (B1) von der Fläche (4.8) des Hohlprofils (4) aus erstreckt und welches zur Durchführung der entsprechenden Befestigungsvorgänge zugänglich ist, und ein zweites Loch (4.3), welches sich in die Verankerungsrichtung (C) von einer anderen der Flächen des Hohlprofils (4) aus erstreckt und mit dem ersten Loch (4.2) kommuniziert, umfasst, wobei das zusätzliche Element (1.1) der Skalabefestigungsvorrichtung im zweiten Loch (4.3) des Hohlprofils (4) aufgenommen ist, und wobei das genannte zusätzliche Element (1.1) ein Loch (1.10) umfasst, welches mit dem ersten Loch (4.2) des genannten Hohlprofils (4) kommuniziert.

5. Optoelektronische Messvorrichtung nach Anspruch 4, wobei das langgestreckte Element (1.0) und das zusätzliche Element (1.1) der Skalabefestigungsvorrichtung derart ausgebildet sind, dass das genannte langgestreckte Element (1.0) als Nocken agiert, und wenn es im Loch (1.10) des zusätzlichen Elements (1.1) aufgenommen ist, die Bewegung des zusätzlichen Elements (1.1) in die Verankerungsrichtung (C) hervorruft.

6. Optoelektronische Messvorrichtung nach Anspruch 5, wobei die äußere Oberfläche des langgestreckten Elements (1.0) der Skalabefestigungsvorrichtung und/oder die Oberfläche des zusätzlichen Elements (1.1) der genannten Skalabefestigungsvorrichtung, welche das Loch (1.10) des zusätzlichen Elements (1.1) begrenzen konisch sind, sodass während sich das langgestreckte Element (1.0) durch das genannte Loch (1.10) bewegt, die Bewegung in die Verankerungsrichtung (C) des zusätzlichen Elements (1.1) hervorgerufen wird.

7. Optoelektronische Messvorrichtung nach einem der Ansprüche 4 bis 6, wobei die Mitte des Lochs (1.10) des zusätzlichen Elements (1.1) der Skalabefestigungsvorrichtung und die Mitte des ersten Lochs (4.2) des Hohlprofils (4) in der Skalabefestigungsrichtung (B1) nicht fluchtend sind, wenn das langgestreckte Element (1.0) nicht in den genannten Löchern (1.10, 4.2) angeordnet ist, wobei die Mitte des Lochs (1.10) des zusätzlichen Elements (1.1) über der Mitte des ersten Lochs (4.2) des Hohlprofils (4) in Bezug auf die Gradskala (3) liegt.

8. Optoelektronische Messvorrichtung nach einem der Ansprüche 4 bis 7, umfassend einen Deckel (5) zum leckdichten Schließen des zweiten Lochs (4.3) des Hohlprofils (4).

9. Optoelektronische Messvorrichtung nach einem der Ansprüche 1 bis 8, wobei die Skalabefestigungsrichtung (B1) und die Profilbefestigungsrichtung (B2) Richtungen sind, welche quer zu beiden Messrichtungen (A1, A2) laufen.

10. Optoelektronische Messvorrichtung nach einem der Ansprüche 1 bis 9, wobei die Skalabefestigungsrichtung (B1) und die Profilbefestigungsrichtung (B2) senkrecht zur Montagefläche (4.9) des Hohlprofils (4) sind.

11. Optoelektronische Messvorrichtung nach einem der Ansprüche 1 bis 10, wobei die Skalabefestigungsrichtung (B1) und die Profilbefestigungsrichtung (B2) parallel sind.

12. Optoelektronische Messvorrichtung nach einem der Ansprüche 1 bis 10, wobei das langgestreckte Element (1.0) der Skalabefestigungsvorrichtung und das langgestreckte Element (2.0) der Profilbefestigungsvorrichtung das gleiche langgestreckte Element sind.

13. Optoelektronische Messvorrichtung nach einem der Ansprüche 1 bis 12, wobei das Hohlprofil (4) aus einer Vielzahl von Hohlprofilsegmenten gebildet ist, welche entlang der Längsachse (X) verteilt sind und mit dem ersten Gegenstand (9) verbunden sind, wobei die optoelektronische Messvorrichtung mindestens eine jeweilige Profilbefestigungsvorrichtung zur Verbindung jedes Hohlprofilsegmentes mit dem genannten ersten Gegenstand (9) umfasst und wobei die Skalabefestigungsvorrichtung mit einem der genannten Hohlprofilsegmente assoziiert ist.

## Revendications

1. Dispositif de mesure opto-électronique configuré pour mesurer la position d'un premier objet par rapport à un second objet, l'un des objets pouvant se déplacer par rapport à l'autre objet le long d'un axe longitudinal (X), dans deux directions de mesure opposées (A1, A2), le dispositif de mesure opto-électronique (100) comprenant une échelle graduée (3), un profilé creux (4) qui comprend un corps principal (4.1) qui définit une cavité interne, et un canal (4.0) disposé dans ladite cavité interne, le canal (4.0) s'étendant le long dudit axe longitudinal (X) et ledit canal (4.0) étant configuré pour loger l'échelle graduée (3), le dispositif de mesure opto-électronique (100) comprenant en outre un dispositif de fixation d'échelle configuré pour immobiliser l'échelle graduée (3) au moins sur l'axe longitudinal (X), dans les deux directions de mesure opposées (A1, A2), lorsqu'elle est logée dans le canal (4.0), et un dispositif de fixation de profilé configuré pour fixer le profilé creux (4) au premier objet (9), le profilé creux (4) comprenant une face de montage (4.9) configurée pour être disposée orientée vers le premier objet (9), le dispositif de fixation d'échelle et le dispositif de fixation de profilé étant accessibles depuis la face (4.8) dudit profilé creux (4) opposée à ladite face de montage (4.9) pour réaliser l'opération de fixation correspondante, le dispositif de fixation d'échelle comprenant un élément allongé (1.0) avec un axe longitudinal (1.01) qui s'étend dans une direction de fixation d'échelle (B1) et le dispositif de fixation de profilé comprenant un élément allongé respectif (2.0) avec un axe longitudinal (2.01) qui s'étend dans une direction de fixation de profilé (B2), le dispositif de fixation d'échelle étant configuré pour réaliser la fixation de l'échelle graduée (3) avec un mouvement longitudinal dans la direction de fixation d'échelle (B1) de son élément allongé (1.0) et le dispositif de fixation de profilé étant configuré pour réaliser la fixation du profilé creux (4) avec un mouvement longitudinal dans la direction de fixation de profilé (B2) de son élément allongé (2.0), **caractérisé en ce que** le dispositif de fixation d'échelle comprend en outre un élément supplémentaire (1.1) configuré pour exercer une pression sur l'échelle graduée (3) disposée dans le canal (4.0) du profilé creux (4), dans une direction d'ancrage (C), configurée pour immobiliser ladite échelle graduée (3) dans les deux directions de mesure opposées (A1, A2), la direction d'ancrage (C) étant différente des deux directions de mesure (A1, A2) et perpendiculaire à la direction de fixation d'échelle (B1) et/ou à l'une quelconque des directions de mesure (A1, A2), et l'élément allongé (1.0) étant configuré pour provoquer le mouvement dudit élément supplémentaire (1.1) dans la direction d'ancrage (C) lorsqu'il est actionné dans la direction de fixation d'échelle (B1) de telle sorte que l'échelle graduée (3) est immobilisée dans les deux directions de mesure (A1, A2) avec cette unique action.

2. Dispositif de mesure opto-électronique selon la revendication 1, dans lequel l'élément supplémentaire (1.1) est configuré pour exercer une pression sur l'échelle graduée (3) de sorte que ladite échelle graduée (3) est pressée contre une surface de support, ladite surface de support étant une surface du canal (4.0) ou une surface d'un élément intermédiaire uni au profilé creux (4).

3. Dispositif de mesure opto-électronique selon la revendication 2, qui comprend un élément intermédiaire uni au profilé creux (4), le dispositif de fixation d'échelle étant configuré de telle sorte que, pour immobiliser l'échelle graduée (3), l'élément supplémentaire (1.1) est adapté pour presser ladite échelle graduée (3) contre un support dudit élément intermédiaire lorsqu'il exerce une pression dans la direction d'ancrage (C) sur ladite échelle graduée (3), ladite échelle graduée (3) étant ainsi immobilisée dans les deux directions de mesure (A1, A2).

4. Dispositif de mesure opto-électronique selon l'une quelconque des revendications 1 à 3, dans lequel le profilé creux (4) comprend un premier orifice (4.2) qui s'étend dans la direction de fixation d'échelle (B1) à partir de la face (4.8) du profilé creux (4) qui est accessible pour réaliser les opérations de fixation correspondantes, et un deuxième orifice (4.3) qui s'étend dans la direction d'ancrage (C) à partir d'une autre des faces du profilé creux (4) et qui est en communication avec le premier orifice (4.2), l'élément supplémentaire (1.1) du dispositif de fixation d'échelle étant logé dans le deuxième orifice (4.3) du profilé creux (4) et ledit élément supplémentaire (1.1) comprenant un orifice (1.10) en communication avec le premier orifice (4.2) dudit profilé creux (4).

5. Dispositif de mesure opto-électronique selon la revendication 4, dans lequel l'élément allongé (1.0) et l'élément supplémentaire (1.1) du dispositif de fixation d'échelle sont configurés de telle sorte que ledit élément allongé (1.0) agit comme une came et, lorsqu'il est logé dans l'orifice (1.10) de l'élément supplémentaire (1.1), il provoque le déplacement de l'élément supplémentaire (1.1) dans la direction d'ancrage (C).

6. Dispositif de mesure opto-électronique selon la revendication 5, dans lequel la surface extérieure de l'élément allongé (1.0) du dispositif de fixation d'échelle et/ou la surface de l'élément supplémentaire (1.1) dudit dispositif de fixation d'échelle qui délimitent l'orifice (1.10) de l'élément supplémentaire (1.1) sont coniques, de sorte qu'à mesure que l'élément allongé (1.0) se déplace à travers ledit orifice (1.10), est provoqué le mouvement dans la direction d'ancrage (C) de l'élément supplémentaire (1.1).

7. Dispositif de mesure opto-électronique selon l'une quelconque des revendications 4 à 6, dans lequel le centre de l'orifice (1.10) de l'élément supplémentaire (1.1) du dispositif de fixation d'échelle et le centre du premier orifice (4.2) du profilé creux (4) sont désalignés dans la direction de fixation d'échelle (B1), lorsque l'élément allongé (1.0) n'est pas disposé dans lesdits orifices (1.10, 4.2), le centre de l'orifice (1.10) de l'élément supplémentaire (1.1) étant au-dessus du centre du premier orifice (4.2) du profilé creux (4) par rapport à l'échelle graduée (3).

8. Dispositif de mesure opto-électronique selon l'une quelconque des revendications 4 à 7, qui comprend un couvercle (5) pour obturer de manière étanche le deuxième orifice (4.3) du profilé creux (4).

9. Dispositif de mesure opto-électronique selon l'une quelconque des revendications 1 à 8, dans lequel la direction de fixation d'échelle (B1) et la direction de fixation de profilé (B2) sont des directions transversales aux deux directions de mesure (A1, A2).

10. Dispositif de mesure opto-électronique selon l'une quelconque des revendications 1 à 9, dans lequel la direction de fixation d'échelle (B1) et la direction de fixation de profilé (B2) sont perpendiculaires à la face de montage (4.9) du profilé creux (4).

11. Dispositif de mesure opto-électronique selon l'une quelconque des revendications 1 à 10, dans lequel la direction de fixation d'échelle (B1) et la direction de fixation de profilé (B2) sont parallèles.

12. Dispositif de mesure opto-électronique selon l'une quelconque des revendications 1 à 10, dans lequel l'élément allongé (1.0) du dispositif de fixation d'échelle et l'élément allongé (2.0) du dispositif de fixation de profilé sont le même élément allongé.

13. Dispositif de mesure opto-électronique selon l'une quelconque des revendications 1 à 12, dans lequel le profilé creux (4) est formé d'une pluralité de segments de profilé creux distribués le long de l'axe longitudinal (X) et unis au premier objet (9), le dispositif de mesure opto-électronique comprenant au moins un dispositif de fixation de profilé respectif pour unir chaque segment de profilé creux audit premier objet (9) et le dispositif de fixation d'échelle étant associé à l'un desdits segments de profilé creux.
